# EUROPEAN PATENT APPLICATION

(11) **EP 4 826 700 A1**
(43) Date of publication of application: **21.10.2026**
(21) Application number: 25170927.5
(22) Date of filing: 16.04.2025
(51) Int. Cl.: G09B 13/04, G09B 15/08

(54) **SYSTEM AND METHOD FOR FINGER-SENSITIVE KEYBOARD USE TRAINING**

(71) Applicant: Picossi Notación Musical, S.L., 41004 Sevilla (ES)
(72) Inventor: PICOSSI, JUAN MANUEL, 41004 SEVILLE (ES)
(74) Representative: Jiménez Diaz, Rafael

(57) **Abstract**

The invention discloses a system (1) for finger-sensitive keyboard use training comprising: sensor means (2) configured for detecting a moment when each key (K) is pressed and also for identifying a finger pressing each key (K); signalling means (3); and a processing means (4) connected to the sensor means (2) and the signalling means (3). The processing means (4) being configured to: receive from the sensor means (2) an identification of a pressed key (K) and of a finger pressing said pressed key (K); determine whether the finger pressing the pressed key (K) is a correct finger for pressing said pressed key (K); and command the signalling means (3) to emit a visual or audible signal based on said determination.

## Description

### OBJECT OF THE INVENTION

The object of the invention is a system and a method designed to train people in a correct use of a keyboard having multiple keys, where the correct use entails pressing particular keys with particular fingers.

These keyboards include, among others, musical instruments such as pianos, electronic keyboards such as synthesizers, organs, clavichords, accordion, etc., as well as typing machines such as typewriters, computer keyboards and the like.

### PRIOR ART

Learning how to use a keyboard correctly is no easy task irrespective of the type of keyboard. In this context, note that a correct use not only entails pressing the keys in a particular sequence, i.e. a particular order, but other considerations need to be taken into account.

Indeed, in typing applications, i.e. when using a typewriter, a correct use means pressing the keys in the particular sequence as fast as possible. In this context, pressing each key with a specific, univocally predetermined finger allows the user to increase the achievable maximum speed.

In musical applications, on the contrary, speed is not important but the keys must be pressed in a specific sequence and also with a particular cadence. Furthermore, each key must be pressed with a specific finger, where the correct finger for pressing a particular key is different depending on the circumstances, such as the particular chord that is being played. Even further, the pressing strength is also important.

Current keyboard use training systems lack any automatic means capable of checking whether the person is using the correct finger when pressing a particular key, or whether the key is pressed with the correct cadence and/or pressing strength. All that is detected is the sequence of keys pressed. Whether the person uses the correct finger or presses the key with the correct cadence and/or pressing strength can only be detected by a person, normally a teacher.

### BRIEF DESCRIPTION OF THE INVENTION

The present invention solves the aforementioned drawbacks by means of a system and method for finger-sensitive keyboard use training configured for automatically detecting which finger presses which key. Based on that knowledge, the system provides signals indicating the user whether the keys are pressed using the correct finger.

Further, in embodiments of the invention, the time when the keys are pressed, the duration of the pressure exerted by the fingers pressing the keys, and/or the force/pressure with which the keys are pressed, are also detected. Based on that knowledge, the system provides further signals indicating whether the keys are pressed at the correct time, for the correct duration and with the correct force. These embodiments are particularly useful for teaching keyboard musical instruments, such as the piano.

### First aspect: system for finger-sensitive keyboard use training

A first aspect of the invention is directed to a system for finger-sensitive keyboard use training. The keyboard comprises a plurality of keys each configured to be pressed by a finger of a user. The keyboard could belong e.g. to any keyboard musical instrument, such as a piano or the like, or else to a typewriter or computer keyboard. In these types of devices, the keys are distributed according to a known pattern, and each key is sized to be pressed by one finger of the user.

The system of the invention mainly comprises sensor means, signalling means and processing means. These components are disclosed in greater detail herein below:

### a. Sensor means

The sensor means are configured for detecting a moment when each key is pressed and also for identifying a finger pressing each key. That is, when the user is using the keyboard, his/her fingers press certain keys. The sensor means detect the pulsation of each key and further identify which of the fingers of the user presses said key (right or left hand; thumb, index finger, middle finger, ring finger or little finger).

The sensor means might be attached or otherwise associated with the keys of the keyboard, the fingers of the user, or a combination of both. Thus, in embodiments disclosed in the present document, each sensor means may comprise a single physical component configured for attachment to the keys. For example, the sensor means could comprise a plurality of sensors each associated to a particular key for detecting the pulsation of said key and for identifying the finger pressing said particular key. Alternatively, in further embodiments, each sensor means may comprise a single physical component configured for attachment to the fingertips of the user, e.g. integrated into the fingertips of a glove to be worn by the user. Such a sensor means could comprise a plurality of sensors, e.g. ten sensors, each associated to a particular fingertip of the glove for detecting the pulsation of a key by each finger. In yet further embodiments, each sensor means may comprise two physical components interacting with one another, where a first physical component is configured for attachment to the keys and a second physical component is configured for attachment to the fingertips of the user.

In further embodiments, the sensor means could be provided at a different location other than the keys of the keyboard or the fingertips of the user. For example, optical sensor means e.g. an image acquisition means, could be provided somewhere near the keyboard for detecting the pulsation of a key and for identifying the finger pressing said key, e.g. by means of image recognition machine learning strategies.

In a particularly preferred embodiment of the present invention, the sensor means comprise the following components:

### a1. Finger detecting and identifying means

The finger detecting and identifying means are configured to detect contact or proximity of each finger of the user to each key of the keyboard and to identify said finger.

In a particularly preferred embodiment of the invention, the finger detecting and identifying means comprises a plurality of fingerprint contact detectors each configured for attachment to a key of the keyboard. A fingerprint detector naturally detects a finger upon contacting the key. In this embodiment, the finger detecting and identifying means comprises as many individual fingerprint detectors as keys in the keyboard, and each of the fingerprint detectors is attached to a corresponding key. Thereto, preferably each fingerprint detector comprises an adhesive for attachment to a key of the keyboard.

In an alternative embodiment of the invention, the finger detecting and identifying means comprises a plurality of identification elements and a plurality of proximity detectors configured for detecting and identifying the proximity of said identification elements. One of the identification elements and the proximity detectors are configured for attachment to the keys of the keyboard, and the other of the identification elements and the proximity detectors are attached to the fingertips of a glove configured to be worn by the user. Thus, when the user presses a key of the keyboard with a fingertip while wearing the glove, the proximity detector attached to one of said key and said fingertip detects and identifies the identification element attached to the other of said key and said fingertip. Preferably, the ones of the identification elements or proximity detectors that is configured for attachment to the keys of the keyboard comprise each an adhesive for attachment to a key of the keyboard.

In preferred embodiments of the invention, the identification elements are configured for attachment to the keys of the keyboard and the proximity detectors are attached to the fingertips of a glove to be used by the user. Indeed, the identification elements being a metal or magnetic plate lacking any physical connection to other parts of the system are less cumbersome when attached, i.e. adhered to the keys of the keyboard. The proximity detectors would then be provided at the fingertips of the glove. This configuration is advantageous in that cables connecting the proximity detectors with the processing means, both for receiving an electrical supply and for communicating to said processing means the detection of a key, could more conveniently connect the gloves with a processing means configured to be attached e.g. to the body of the user.

### b1. Key pressing detecting means

A plurality of key pressing detecting means are configured to detect a moment when each key of the keyboard is pressed.

In typewriting applications, it would be conceivable that the information regarding the pressing of the keys be obtained from internal signals of the keyboard. In that case, the key pressing detecting means would be embedded withing the keyboard itself.

In musical applications, it would be conceivable that the information regarding the pressing of the keys be obtained from the sound made by the particular pressed key. In this case, the key pressing detecting means would not necessarily have to be attached or otherwise physically associated to the keyboard instrument or to a glove worn by the user. Even further, in musical applications, the information regarding the pressing of the keys might be obtained from sensors installed within the instrument, e.g. sensors detecting the movement of the strings.

In any case, in particularly preferred embodiments of the invention the key pressing detecting means are configured for attachment to one between the keys of the keyboard and the fingertips of the glove to be worn by the user. In particular embodiments of the invention, the key pressing detecting means have an adhesive or the like for attachment to the keys.

A number of technologies could be employed for detecting the pulsation of the keys. For example, the key pressing detecting means could be one of pressure sensors, optical sensors, a sound detector or limit-switch sensors.

Pressure sensors would be particularly suitable when the key pressing detecting means are attached to the keys or to the fingertips, whereby a detected pressure exceeding a certain threshold would imply the pulsation of the key.

Limit-switch sensors would be suitable when the key pressing detecting means are attached to the keys, whereby a key reaching a particular recessed position detected by the limit-switch would imply the pulsation of said key.

Optical sensors, e.g. laser, ultrasonic or infrared sensors, could also detect the aforementioned particular recessed position implying the pulsation of the key. Further, optical sensors in the sense of image acquisition means could be used in combination with visual recognition machine learning strategies to detect the pulsation of the keys.

A sound detector could be employed for recognizing the tone of the note played in musical keyboard applications. The sound detector could be configured to identify the pressed key based on the tone emitted by the keyboard upon the user pressing said pressed key. Using a sound detector is advantageous in that it does not have to be installed in the keyboard itself.

### b. Signalling means

The signalling means are intended to provide information to the user regarding whether the keys are pressed with the correct finger or not. The signalling means could be configured in a number of suitable ways.

For example, a single signalling means could be provided for signalling whether the fingers pressing the keys are the correct fingers. In this case, the user would infer which finger/key is involved in the mistake based on the moment when the signal is emitted. The signal could be a visual signal or an audible signal.

In a particularly preferred embodiment of the invention, the signalling means are visual signalling means. In this case, the system comprises a plurality of visual signalling means each configured for attachment to one between a key of the keyboard and a fingertip of the user. In turn, the processing means are configured to command the visual signalling means attached to the pressed key, or to the fingertip of the finger pressing the pressed key, to emit a signal based on the determination of whether the finger pressing the pressed key is a correct finger for pressing said pressed key.

In a particularly preferred embodiment, the visual signalling means are configured for attachment to the keys of the keyboard. For example, each visual signalling means may comprise an adhesive for attachment to a key of the keyboard. In this manner, the identification regarding which of the keys was not pulsed with the correct finger would be instantaneous. The visual signalling means could be light emitters, e.g. LEDs.

Light signals are generally preferred over sound signals, particularly in the context of keyboard musical instruments. However, sound emitting means could also be employed in certain applications, e.g. typewriting. Even in musical applications the emission of sound signals could prove useful under certain circumstances.

Therefore, the signalling means could be audible signalling means. In this case, the system of the invention may comprise audible signalling means configured to emit an audible signal based on the determination of whether the finger pressing the pressed key is the correct finger for pressing said pressed key. The audible signalling means could be a single means connected to, or integrated with, the processing means.

A combination of visual signalling means and audible signalling means would also be conceivable.

### c. Processing means

The processing means are connected to the sensor means and the signalling means. This connection could be implemented in any suitable manner, whether cabled or wireless. The processing means is configured to carry out the following tasks:
1. Receive from the sensor means an identification of a pressed key and of a finger pressing said pressed key.
2. Determine whether the finger pressing the pressed key is a correct finger for pressing said pressed key.
3. Command the signalling means to emit a signal based on said determination.

The processing means could be of any kind provided they have the connectivity and processing power required to carry out the aforementioned tasks. For example, the processing means could be a microprocessor, a microcontroller, a DSP, an FPGA, an ASIC, or the like.

The processing means also comprises storing means for storing a database linking each key with a correct finger. This database could comprise one or more tables linking the keys with the correct fingers corresponding to said keys.

For example, for typewriting applications, the letter A must be pressed always with the left little finger, the letter B must be pressed always with the right index finger, and so on. This information could be coded as a simple two-column table.

While typewriting is static in that each key is univocally associated with a single correct finger, this is not the case in musical applications. In musical applications, such as piano playing, there are a number of correct fingers for a particular key, where the correct finger depends on the particular circumstances. Thus, in musical applications there may be a number of tables linking each key with a correct finger, normally a particular table for each composition. Further, in musical applications it may well be that a particular key is to be pressed with a first finger at a certain moment when a particular chord is played, and with a second finger at a different moment when a different chord is played. Therefore, key-finger tables in musical applications are preferably dynamic, in the sense that the key-finger pairs change with time as the composition advances from one chord to another.

Further, the table corresponding to a musical composition may optionally include information regarding the time when each key is to be pressed to ensure a correct musical cadence, information regarding the duration of the pressing of each key, and/or information regarding the pressure or force to be applied to each key. Tables for musical applications are thus much more complex than those for typewriting applications.

To enable the tables to be charged, i.e. stored, in the storing means of the processing means, the processing means may comprise input/output means. The input/output means could be of any kind that provides a data connection to an external device, such as a mobile phone, computer or the like. This input/output means could be wired, such as a USB connection or the like, or else the input/output means could be wireless, i.e. by means of Bluetooth or Wifi.

This system therefore provides for a much convenient process to teach a user to correctly use a keyboard. Each time a mistake is made regarding the correct finger for pressing a key, a signal is emitted. The learning process is therefore much more intuitive, and therefore much fasater.

### Second aspect: method for finger-sensitive keyboard use training

A second aspect of the invention is directed to a method for finger-sensitive keyboard use training. Again, the keyboard comprises a plurality of keys each configured to be pressed by a finger of a user. The keyboard could belong e.g. to any keyboard musical instrument, such as a piano or the like, or else to a typewriter or computer keyboard. In these types of devices, the keys are distributed according to a known pattern, and each key is sized to be pressed by one finger of the user.

The method comprises the following steps:
- detecting a moment when each key is pressed and also identifying a finger pressing each key;
- determining whether a finger pressing a pressed key is a correct finger for pressing said pressed key; and
- emitting a visual or audible signal based on said determination.

In a preferred embodiment, the method further comprises a step of determining whether the time when the pressed key is pressed is a correct moment for pressing said pressed key. In a further preferred embodiment, the method comprises a step of determining whether a pressing force of the finger pressing the pressed key is a correct pressing force for pressing said pressed key. In yet a further preferred embodiment, the method comprises a step of determining whether a pressing duration of the finger pressing the pressed key is a correct pressing duration for pressing said pressed key.

In another preferred embodiment of the invention, the step of emitting a signal comprises emitting, by a light emitter attached to the pressed key:
- light of a first colour if the pressed key is the correct key and, when applicable, is pressed at the correct time, with the correct pressing force and with the correct pressing duration; and
- a light of a second colour if the pressed key is not the correct key or, when applicable, is not pressed at the correct time, with the correct pressing force or with the correct pressing duration.

Preferably, a tone of the second colour is different depending on whether the pressed key is not the correct key or, when applicable, the pressed key is not pressed at the correct time, the pressed key is not pressed with the correct pressing force or the pressed key is not pressed with the correct pressing duration.

In still another preferred embodiment of the invention, the method further comprises a step of emitting an audible signal if the pressed key is not the correct key or, when applicable, is not pressed at the correct time, with the correct pressing force or with the correct pressing duration.

### BRIEF DESCRIPTION OF THE FIGURES

Fig. 1 shows a first embodiment of a system according to the present invention in a musical keyboard instrument application.

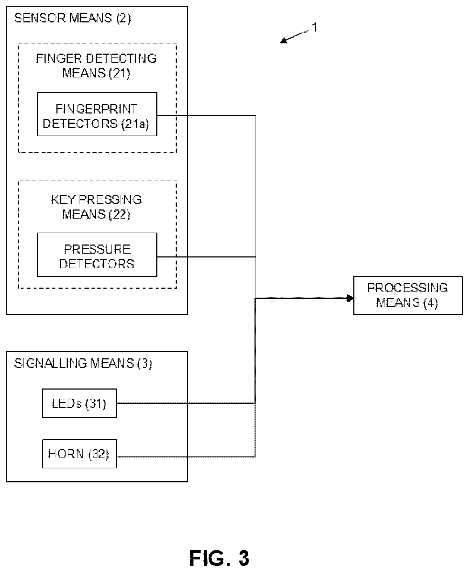

Fig. 3 shows a second embodiment of a system according to the present invention in a typewriting application.

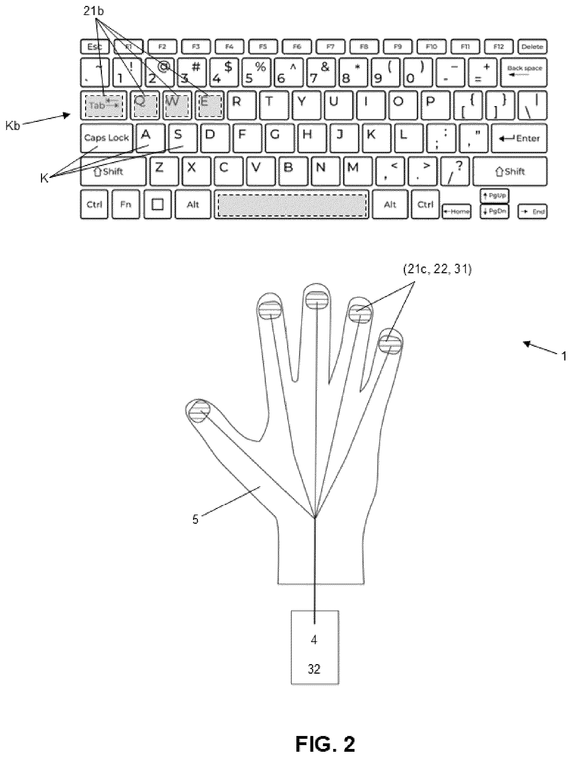

Fig. 2 shows a schematic representation of the system of the invention.

### PREFERRED EMBODIMENT OF THE INVENTION

The system (1) comprises sensor means (2), signalling means (3) and processing means (4). In this first embodiment, these means (2, 3, 4) are designed so as to minimise the components to be installed in the keys (K) of the keyboard (Kb). Further, the components to be installed in the keys (K) of the keyboard (Kb) do not require any electrical connection. The system (1) of the first embodiment is therefore particularly advantageous with regard to ease of installation.

In the system (1) of the first embodiment, the sensor means (2) comprise finger detecting/identifying means (21) and key pressing detecting means (22).

The finger detecting/identifying means (21) are implemented by means of two separate components, namely a plurality of identification elements (21b) configured for attachment to the keys (K) of the keyboard (Kb), and five proximity detectors (21c) attached to the fingertips of a glove (5) to be worn by the user in each hand.

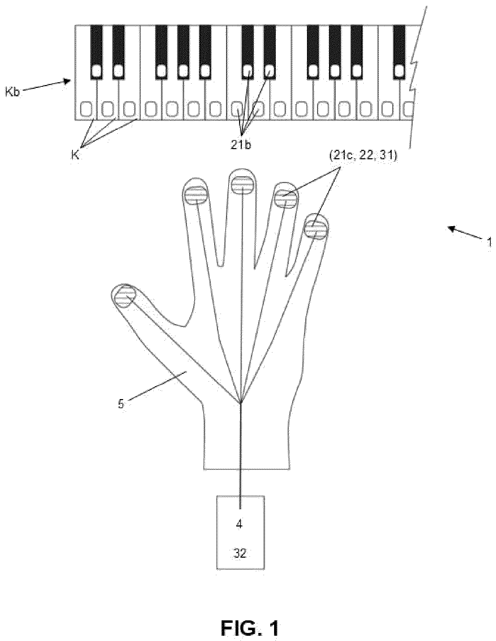

In particular, the identification elements (21b) are thin adhesive pads containing a detectable feature, such as a magnetic or metal part. The size of these pads is approximately coincident with the size of the keys (K) of the keyboard (Kb). For example, for typewriting applications the pads could have a square shape of 1 x 1 cm. Alternatively, as shown in Fig. 1, when applied to a piano the pads may have a rectangle shape of (0,5-1,0) x (5-10) cm. A pad is adhered to each of the keys (K) of the keyboard (Kb).

The proximity detectors (21c) are also thin pads attached to the fingertips of the glove (5). The proximity detectors (21c) can be based on any technology provided they are capable of determining whether they are close to an identification element (21b), and also of identifying which specific identification element (21b) they are close to. Thus, when a finger of the user wearing the glove abuts against a particular key (K) of the keyboard (Kb), the proximity detector (21c) provided at the fingertip of the glove (5) corresponding to said finger is brought adjacent the identification element (21b) attached to said key (K). The proximity detector (21c) thereby detects and identifies said identification element (21b).

In the present embodiment, the key pressing detecting means (22) are a plurality of pressure detectors provided at the fingertips of the glove (5) and calibrated to detect the pressure needed to actually press a key, i.e. to cause the key to descend from the upper released position to the lower pressed position. These pressure detectors (22) are integrated along with the proximity detector (21c) into the pads provided at the fingertips of the glove (5).

In this respect note that, as mentioned earlier in the present document, the key pressing detecting means (22) in music keyboard applications could alternatively be implemented as a sound sensor configured for detecting the tone of the key (K) played by the user. This kind of key pressing detecting means (22) could e.g. be connected to, or integrated into, the processing means (4).

The signalling means (3) of the first embodiment comprise both visual signalling means (31) and audible signalling means (32). The visual signalling means (31) are five selectable-colour LEDs integrated, together with the proximity detectors (21c) and the pressure detectors (22), into the pads provided at the fingertips of the glove (5). The audible signalling means (32) comprises a horn connected to the processing means (4).

The processing means (4) is in communication with the proximity detectors (21c), the pressure sensors (22) and the LEDs (31), all of which are integrated into the pads provided at the fingertips of the glove (5). In this example, this connection is wired by means of small-diameter wires running along the glove fabric until coming together into a single cable which protrudes from the glove (5). This cable is connected to a casing (C) containing the processing means (4). The casing (C) may also contain a power supply means, such as a rechargeable battery, to thereby provide the proximity detectors (21c), the pressure sensors (22) and the LEDs (31) with an electrical supply. The horn (32) could also be provided within the casing (C).

The processing means (4) is charged with a particular table containing key-finger pairs. For typewriting applications, where a single table suffices, the table could be pre-loaded in the processing means. For musical applications, the table corresponding to a particular composition to be played would be loaded into the storing means of the processing means, e.g. from a smartphone by means of a Bluetooth connection.

Now, the user starts playing. The pressure detectors (22) integrated at the pads provided at the fingertips of the glove (5) detect which key (K) is pressed, and simultaneously the proximity detectors (21c) also included in said pads provided at the fingertips of the glove (5) determine exactly which of the fingers of the user has pressed said key (K). Each key-finger pair is sent from the to the processing means (4), and the processing means (4) then check whether this key-finger pair is the correct pair. In musical applications, as mentioned above, the correct key-finger pair is also time-dependent, or, more precisely, sequence-dependent. This information is, however, encoded in the table. In any case, the processing means checks whether the key was pressed with the correct finger.

Depending on the outcome of this operation, the processing means (4) may command the particular LED (31) attached to the relevant finger to emit a particular visual signal. For example, no signal is emitted by the LED (31) if the key (K) was pressed with the correct finger. Alternatively, a green signal is emitted by the LED (31) if the key (K) was pressed with the correct finger. Otherwise, in case the key (K) was pressed with an incorrect finger, a red or orange light is emitted by the LED (31). The horn (42) provided at the casing (C) also emits a sound signal indicating that a wrong finger was used to press said key (K).

## Claims

1. A system (1) for finger-sensitive keyboard use training, wherein the keyboard (Kb) comprises a plurality of keys (K) each configured to be pressed by a finger of a user, **characterized by** comprising:
- sensor means (2) configured for detecting a moment when each key (K) is pressed and also for identifying a finger pressing each key (K);
- signalling means (3); and
- a processing means (4) connected to the sensor means (2) and the signalling means (3), the processing means (4) being configured to:
- receive from the sensor means (2) an identification of a pressed key (K) and of a finger pressing said pressed key (K);
- determine whether the finger pressing the pressed key (K) is a correct finger for pressing said pressed key (K); and
- command the signalling means (3) to emit a visual or audible signal based on said determination.

2. The system (1) for finger-sensitive keyboard use training according to claim 1, where the sensor means (2) comprise:
- finger detecting and identifying means (21) configured to detect contact or proximity of each finger of the user to each key (K) of the keyboard (Kb) and to identify said finger; and
- a plurality of key pressing detecting means (22) configured to detect a moment when each key (K) of the keyboard (Kb) is pressed.

3. The system (1) for finger-sensitive keyboard use training according to claim 2, where the finger detecting and identifying means (21) comprises a plurality of fingerprint contact detectors (21a) each configured for attachment to a key (K) of the keyboard (Kb).

4. The system (1) for finger-sensitive keyboard use training according to claim 3, where each fingerprint contact detector (21a) comprises an adhesive for attachment to a key of the keyboard (100).

5. The system (1) for finger-sensitive keyboard use training according to claim 2, where the finger detecting and identifying means (21) comprises a plurality of identification elements (21b) and a plurality of proximity detectors (21c) configured for detecting and identifying the proximity of said identification elements (21b);
where one of the identification elements (21b) and the proximity detectors (21c) are configured for attachment to the keys (K) of the keyboard (Kb), and
the other of the identification elements (21b) and the proximity detectors (21c) are attached to the fingertips of a glove (5) configured to be worn by the user,
such that, when the user presses a key (K) of the keyboard (Kb) with a fingertip while wearing the glove (5), the proximity detector (21c) attached to one of said key (K) and said fingertip detects and identifies the identification element (21b) attached to the other of said key (K) and said fingertip.

6. The system (1) for finger-sensitive keyboard use training according to claim 5, where the ones of the identification elements (21b) or proximity detectors (21c) that is configured for attachment to the keys (K) of the keyboard (Kb) comprise each an adhesive for attachment to a key (K) of the keyboard (Kb).

7. The system (1) for finger-sensitive keyboard use training according to claim 2, where each key pressing detecting means (22) is configured for attachment to one between a key (K) of the keyboard (Kb) and the fingertips of the glove (5).

8. The system (1) for finger-sensitive keyboard use training of claim 7, where the key pressing detecting means (22) are one of pressure sensors, optical sensors, a sound detector, or limit-switch sensors.

9. The system (1) for finger-sensitive keyboard use training of claim 8, comprising a sound detector configured to identify the pressed key (K) based on the tone emitted by the keyboard (Kb) upon the user pressing said pressed key (K)

10. The system (1) for finger-sensitive keyboard use training of claim 1, comprising a plurality of visual signalling means (31) each configured for attachment to one between a key (K) of the keyboard (Kb) and a fingertip of the user, the processing means (4) being configured to command the visual signalling means (31) attached to the pressed key (K) or to the fingertip of the finger pressing the pressed key (K) to emit a signal based on the determination of whether the finger pressing the pressed key (K) is a correct finger for pressing said pressed key (K).

11. The system (1) for finger-sensitive keyboard use training of claim 10, where each visual signalling means (31) comprises an adhesive for attachment to a key (K) of the keyboard (Kb).

12. The system (1) for finger-sensitive keyboard use training of claim 11, where each visual signalling means (31) comprises a light emitter.

13. The system (1) for finger-sensitive keyboard use training of claim 1, comprising audible signalling means (32) configured to emit an audible signal based on the determination of whether the finger pressing the pressed key (K) is the correct finger for pressing said pressed key (K).

14. Method for finger-sensitive keyboard use training, where the keyboard (Kb) comprises a plurality of individual keys (K) each configured to be pressed by a finger of a user, **characterized by** comprising the following steps:
- detecting a moment when each key (K) is pressed and also identifying a finger pressing each key (K);
- determining whether a finger pressing a pressed key (K) is a correct finger for pressing said pressed key (K); and
- emitting a visual or audible signal based on said determination.

15. Method for finger-sensitive keyboard use training according to claim 14, further comprising a step of determining whether the time when the pressed key (K) is pressed is a correct time for pressing said pressed key (K).

16. Method for finger-sensitive keyboard use training according to claim 14, further comprising a step of determining whether a pressing force of the finger pressing the pressed key (K) is a correct pressing force for pressing said pressed key (K).

17. Method for finger-sensitive keyboard use training according to claim 14, further comprising a step of determining whether a pressing duration of the finger pressing the pressed key (K) is a correct pressing duration for pressing said pressed key (K).

18. Method for finger-sensitive keyboard use training according to claim 14, where the step of emitting a visual signal comprises emitting, by a light emitter attached to the pressed key (K):
- light of a first colour if the pressed key (K) is the correct key (K) and, when applicable, is pressed at the correct time, with the correct pressing force and with the correct pressing duration; and
- a light of a second colour if the pressed key (K) is not the correct key (K) or, when applicable, is not pressed at the correct time, with the correct pressing force or with the correct pressing duration.

19. Method for finger-sensitive keyboard use training according to claim 18, where a tone of the second colour is different depending on whether the pressed key (K) is not the correct key (K) or, when applicable, is not pressed at the correct time, with the correct pressing force or with the correct pressing duration.

20. Method for finger-sensitive keyboard use training according to claim 14, further comprising a step of emitting an audible signal if the pressed key (K) is not the correct key or, when applicable, is not pressed at the correct time, with the correct pressing force or with the correct pressing duration.

## Amended claims

### Amended claims in accordance with Rule 137(2) EPC.

1. A system (1) for finger-sensitive keyboard use training, comprising:
- sensor means (2) configured for detecting a moment when each key (K) of the keyboard (Kb) is pressed and also for identifying a finger pressing each key (K), the sensor means (2) comprising:
finger detecting and identifying means (21) configured to detect contact or proximity of each finger of the user to each key (K) of the keyboard (Kb) and to identify said finger; and
a plurality of key pressing detecting means (22) configured to detect a moment when each key (K) of the keyboard (Kb) is pressed;
- signalling means (3); and
- a processing means (4) connected to the sensor means (2) and the signalling means (3), the processing means (4) being configured to:
- receive from the sensor means (2) an identification of a pressed key (K) and of a finger pressing said pressed key (K);
- determine whether the finger pressing the pressed key (K) is a correct finger for pressing said pressed key (K); and
- command the signalling means (3) to emit a visual or audible signal based on said determination.
**characterized in that**
the finger detecting and identifying means (21) comprises a plurality of identification elements (21b) and a plurality of proximity detectors (21c) configured for detecting and identifying the proximity of said identification elements (21b);
where each identification element (21b) is an adhesive pad configured for attachment to a key (K) of the keyboard (Kb), said adhesive pad containing a detectable magnetic or metal part, and
the proximity detectors (21c) are attached to the fingertips of a glove (5) configured to be worn by the user,
such that, when the user presses a key (K) of the keyboard (Kb) with a fingertip while wearing the glove (5), the proximity detector (21c) attached to said fingertip detects and identifies the identification element (21b) attached to said key (K) of said keyboard (Kb).

2. The system (1) for finger-sensitive keyboard use training according to claim 1, where each key pressing detecting means (22) is configured for attachment to one between a key (K) of the keyboard (Kb) and the fingertips of the glove (5).

3. The system (1) for finger-sensitive keyboard use training of claim 2, where the key pressing detecting means (22) are one of pressure sensors, optical sensors, a sound detector, or limit-switch sensors.

4. The system (1) for finger-sensitive keyboard use training of claim 3, comprising a sound detector configured to identify the pressed key (K) based on the tone emitted by the keyboard (Kb) upon the user pressing said pressed key (K)

5. The system (1) for finger-sensitive keyboard use training of claim 1, comprising a plurality of visual signalling means (31) each configured for attachment to one between a key (K) of the keyboard (Kb) and a fingertip of the user, the processing means (4) being configured to command the visual signalling means (31) attached to the pressed key (K) or to the fingertip of the finger pressing the pressed key (K) to emit a signal based on the determination of whether the finger pressing the pressed key (K) is a correct finger for pressing said pressed key (K).

6. The system (1) for finger-sensitive keyboard use training of claim 5, where each visual signalling means (31) comprises an adhesive for attachment to a key (K) of the keyboard (Kb).

7. The system (1) for finger-sensitive keyboard use training of claim 6, where each visual signalling means (31) comprises a light emitter.

8. The system (1) for finger-sensitive keyboard use training of claim 1, comprising audible signalling means (32) configured to emit an audible signal based on the determination of whether the finger pressing the pressed key (K) is the correct finger for pressing said pressed key (K).
